# EUROPEAN PATENT SPECIFICATION

(11) **EP 3 430 440 B1**
(45) Date of publication and mention of the grant of the patent: **13.10.2021**
(21) Application number: 17714133.0
(22) Date of filing: 17.03.2017
(51) Int. Cl.: G01T 1/20, G01T 1/24, G01T 7/00

(54) **RADIATION DETECTOR FOR SIMULTANEOUSLY DETECTING A PLURALITY OF RADIATIONS**
STRAHLUNGSDETEKTOR ZUR GLEICHZEITIGEN ERKENNUNG VON MEHREREN STRAHLUNGEN
DÉTECTEUR DE RAYONNEMENT POUR LA DÉTECTION SIMULTANÉE D'UNE PLURALITÉ DE RAYONNEMENTS

(30) Priority: 18.03.2016 US 201662310338 P
(43) Date of publication of application: 23.01.2019
(73) Proprietor: Board of Regents, The University of Texas System, Austin, TX 78701 (US); Nanoholdings, LLC, Rowayton, CT 06853 (US)
(72) Inventor: QUEVEDO-LOPEZ, Manuel, Richardson, TX 75082 (US); MEJIA SILVA, Jesus I., Frisco, TX 75036 (US); PRADHAN, Bhabendra K., Marietta, GA 30066 (US); GNADE, Bruce E., Lewisville, TX 75056 (US)
(74) Representative: J A Kemp LLP
(86) International application number: PCT/US2017/022893
(87) International publication number: WO 2017/161229

(56) References cited:
- WO-A1-2015/093690
- US-A1- 2006 284 094
- US-A1- 2008 290 286
- US-A1- 2016 003 953
- J Metcalfe ET AL: "Potential of Thin Films for use in Charged Particle Tracking Detectors", , 6 November 2014 (2014-11-06), XP055382533, Retrieved from the Internet: URL:https://arxiv.org/pdf/1411.1794.pdf [retrieved on 2017-06-19]

## Description

### CROSS REFERENCE TO RELATED APPLICATION

This application claims the benefit of U.S. Provisional Application Serial No. 62/310,338, filed March 18, 2016.

### BACKGROUND OF THE INVENTION

The present invention generally relates to radiation detectors, and, more particularly, to a hand-held radiation detector for simultaneously detecting multiple radiations.

Radiation detectors are utilized to detect multiple radiations such as alpha particles, beta particles, gamma rays, X-rays, and neutron particles. Conventional hand-held radiation detectors are generally deployed in security areas such as airports, border protection, and the like. One technique of detecting neutron particles generally includes a Helium-3 (He3+) tube. Since He3+ is a rare isotope of helium, it is not widely available. Thus, He3+ is produced through the decay of tritium. However, the production of He3+ through the decay of tritium is a very slow process, thereby limiting the scope of its usage in the above-mentioned applications. Moreover, He3+ tube cannot be used for detecting radiations other than neutron particles.

Further, the radiations detected by the radiation detectors need to be processed, identified, and displayed to a user. However, the conventional radiation detectors do not include electronic circuits for interfacing the radiation detectors with smartphones or personal computers. Hence, systems that include the radiation detectors, further include processing systems and display units for processing and displaying the detected radiations, respectively. This results in an increase in the overall cost of the system.

Alternate techniques of detecting radiations include the use of systems such as photomultiplier tubes, air ionization chambers, and Geiger-Muller counters. However, the aforementioned systems result in an increase in the overall cost, area, and weight of the radiation detectors. Further, the power required for operating these systems is very high.

Yet another technique to build amplifiers for radiation detectors is the use of circuits based on JFET and bipolar transistors. Such circuits are complex to design and require high operational voltages. Further, these circuits are typically used in radiation detectors to detect a single radiation, e.g., neutron particles, and are difficult to integrate on a single integrated circuit for detecting multiple radiations.

### BRIEF SUMMARY OF THE INVENTION

According to a first aspect of the invention there is provided a system as set out in claim 1.

Embodiments of the subject invention provide novel and advantageous systems for detecting radiation. According to the invention, there is provided a system which includes an array of detectors for receiving the radiation, which may include multiple types of radiation, and an integrated circuit (IC). Each detector detects a specific type of radiation and generates a corresponding detector output signal. The IC receives the corresponding detector output signal from each detector and generates an output signal that is indicative of detecting the radiation. The array of detectors can be implemented using silicon technology, thin film technology, or both. The IC can be implemented using complementary metal oxide semiconductor (CMOS) technology, thin film technology, or both.

### BRIEF DESCRIPTION OF THE DRAWINGS

The following detailed description of the preferred embodiments of the present invention will be better understood when read in conjunction with the appended drawings. The present invention is illustrated by way of example, and not limited by the accompanying figures, in which like references indicate similar elements.
FIG. 1 is a schematic block diagram of a radiation detector in accordance with an embodiment of the present invention;
FIG. 2 is a schematic circuit diagram of a sensor, a preamplifier, and a signal shaping circuit of the radiation detector of FIG. 1 in accordance with an embodiment of the present invention;
FIG. 3 is a schematic circuit diagram of the sensor, the preamplifier, and the signal shaping circuit of the radiation detector of FIG. 1 in accordance with another embodiment of the present invention;
FIG. 4 is a schematic circuit diagram of the preamplifier of the radiation detector of FIG. 1 in accordance with another embodiment of the present invention;
FIGS. 5A and 5B are front and rear views of the radiation detector of FIG. 1 in accordance with an embodiment of the present invention;
FIG. 6 is a perspective view of the radiation detector of FIG. 1 including a reflector in accordance with another embodiment of the present invention; and
FIG. 7 is a perspective view of the radiation detector of FIG. 1 in accordance with another embodiment of the present invention.

### DETAILED DESCRIPTION

The detailed description of the appended drawings is intended as a description of the currently preferred embodiments of the present invention, and is not intended to represent the only form in which the present invention may be practiced.

An object of the present invention is to provide a radiation detector for detecting radiations.

It would be advantageous to have a radiation detector that simultaneously detects multiple radiations, has a simple design, provides high resolution, and that overcomes the problems of the conventional radiation detectors discussed in the Background section. Thus, it is also an object of the present invention to provide such a radiation detector.

An embodiment of the present invention provides a radiation detector for detecting multiple radiations such as alpha particles, beta particles, gamma rays, X-rays, and neutron particles. The radiation detector includes an array of detectors and an integrated circuit (IC). The array of detectors receives the multiple radiations and generates corresponding multiple detector output signals. The IC is connected to the array of detectors for receiving the detector output signals and generates an output signal that is indicative of detecting a radiation. Further, the array of detectors is implemented using at least one of a silicon technology and a thin film technology and the IC is implemented using at least one of a complementary metal oxide semiconductor (CMOS) technology and the thin film technology.

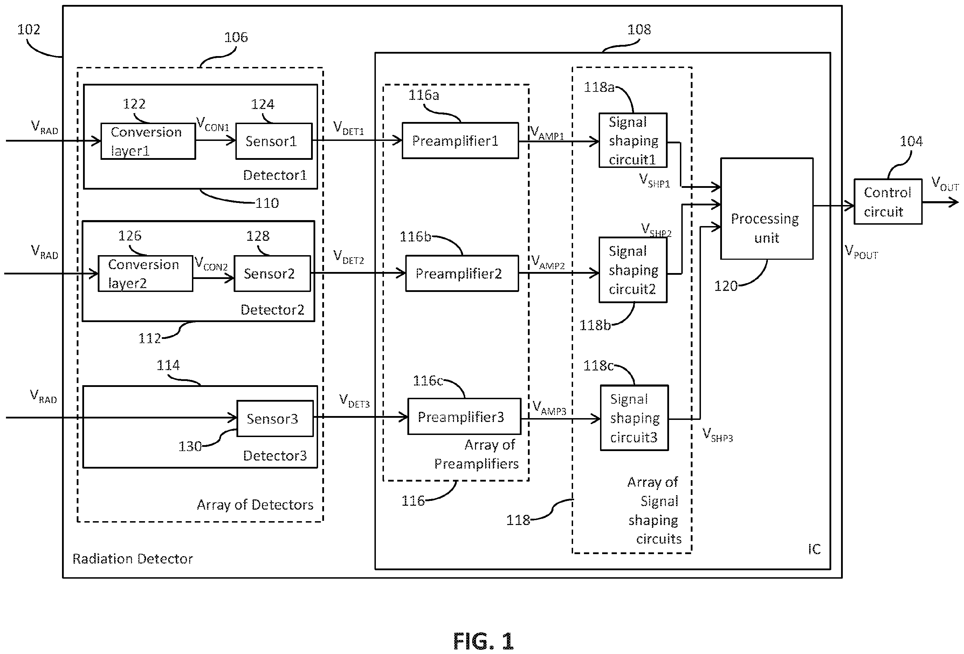

Referring now to FIG. 1, a schematic block diagram of a radiation detector **102** connected to a control circuit **104** in accordance with an embodiment of the present invention is shown. The radiation detector **102** detects multiple radiations such as alpha rays, beta rays, gamma rays, X-rays, and neutron particles. The radiation detector **102** includes an array of detectors **106** and an integrated circuit (IC) **108.** In an embodiment, the array of detectors **106** is implemented using silicon technology, and the IC **108** is implemented using complementary metal oxide semiconductor (CMOS) technology. In another embodiment, the array of detectors **106** and the IC **108** are implemented using a thin film technology. Because the array of detectors **106** includes multiple detectors, the radiation detector **102** provides an interchangeable pixelated array of detectors **106** to detect the multiple radiations or types of radiation.

The array of detectors **106** includes first through third detectors **110-114.** The IC **108** includes an array of preamplifiers **116,** an array of signal shaping circuits **118,** and a processing unit **120.** The array of preamplifiers **116** includes first through third preamplifiers **116a-116c.** The array of signal shaping circuits **118** includes first through third signal shaping circuits **118a-118c.** In an embodiment, when the radiation detector **102** is configured to detect a single type of the radiation, the processing unit **120** includes an OR logic gate. The OR logic gate may include a NOR logic gate. In another embodiment, when the radiation detector **102** is configured to detect multiple radiations or types of radiation, the processing unit **120** includes a microcontroller or a digital signal processor.

The array of detectors **106** receives multiple radiations or types of radiation including first through third radiations or types of radiation. The first through third detectors **110-114** detect the first through third (types of) radiation(s), respectively. In an embodiment, the first (type of) radiation is a neutron radiation, the second (type of) radiation is either a gamma ray or an X-ray, and the third (type of) radiation is one of an alpha ray or a beta ray.

The first detector **110** that detects neutron radiations includes a first conversion layer **122** and a first sensor **124.** The first conversion layer **122** includes nanoparticles of neutron sensitive materials such as Boron (¹⁰B) and Gadolinium (¹⁵⁷Gd) in their carbide, oxide, nitride, and metallic forms. The first conversion layer **122** receives the multiple radiations and generates corresponding ionizing radiations. The ionizing radiations (hereinafter referred to as "first conversion output signal **V_{CON1}**") include at least one of beta particles, gamma rays, and alpha particles. The first sensor **124** is a charge sensor and includes either a PN diode or a PIN diode.

When the first detector **110** receives the multiple radiations, the first conversion layer **122** generates the first conversion output signal V_{CON1} corresponding to the first radiation. The first sensor **124,** which is connected to the first conversion layer **122,** receives the first conversion output signal **V_{CON1}** and generates a first detector signal **V_{DET1}.**

The second detector **112** that detects at least one of gamma rays or X-rays includes a second conversion layer **126** and a second sensor **128.** The second conversion layer **126** is either a gamma scintillator or an X-ray scintillator. The second conversion layer **126** includes either sodium iodide doped with thallium NaI(TI), Cesium iodide doped with thallium CsI(TI), sodium activated cesium iodide CsI(Na), or anthracene. The second sensor **128** is a charge sensor and includes either a PN diode or a PIN diode.

When the second detector **112** receives the multiple radiations, the second conversion layer **126** generates a second conversion output signal V_{CON2} corresponding to the second radiation. The second sensor **128** that is connected to the second conversion layer **126** receives the second conversion output signal **V_{CON2}** and generates a second detector signal **V_{DET2}**.

The third detector **114** includes a third sensor **130** which is a photon-sensitive sensor. The third sensor **130** includes either a photosensor or a photoconductor. When the third detector **114** receives the multiple radiations, the third sensor **130** generates a third detector signal **V_{DET3}** corresponding to the third radiation.

The first through third preamplifiers **116a-116c** are connected to the first through third sensors **124, 128,** and **130,** respectively, for receiving the first through third detector signals **V_{DET1}**-V**_{DET3}** and generating first through third amplified detector signals **V_{AMP1}**-**V_{AMP3}**, respectively. The first through third signal shaping circuits **118a-118c** are connected to the first through third preamplifiers **116a-116c,** respectively, for receiving the first through third amplified detector signals **V_{AMP1}-V_{AMP3}** and generating first through third shaped detector signals **V_{SHP1}-V_{SHP3}**, respectively.

The processing unit **120** is connected to the first through third signal shaping circuits **118a-118c** for receiving the first through third shaped detector signals **V_{SHP1}**-**V_{SHP3}**, and generating a processed output signal **V_{POUT}.** The processed output signal **V_{POUT}** is generated based on logic states of the first through third shaped detector signals **V_{SHP1}-V_{SHP3}**.

The control circuit **104** is connected to the processing unit **120** for receiving the processed output signal **V_{POUT}** and generating an output signal **V_{OUT.}** The control circuit **104** acts as an interface between the radiation detector **102** and at least one of smartphones, tablets, personal computers, and laptops. The smartphones, tablets, personal computers, and laptops further process the output signal **V_{OUT.}** to identify the incident radiation. Further, these devices provide a graphical representation of the incident radiation **V_{RAD}**.

In another embodiment, the processing unit **120** includes a multichannel analyzer (MCA) (not shown). The MCA identifies the type of radiation **V_{RAD}** based on the first through third shaped detector signals **V_{SHP1}-V_{SHP3}**.

In an embodiment, the radiation detector **102** and the control circuit **104** are included on a single substrate. In another embodiment, the radiation detector **102** and the control circuit **104** are included on different substrates. In an embodiment, the substrate is a silicon substrate. In another embodiment, the substrate is either glass or plastic. Further, the array of preamplifiers **116** and the array of signal shaping circuits **118** can be implemented using either a poly-silicon, oxide-based semiconductors, or amorphous silicon thin film electronic devices.

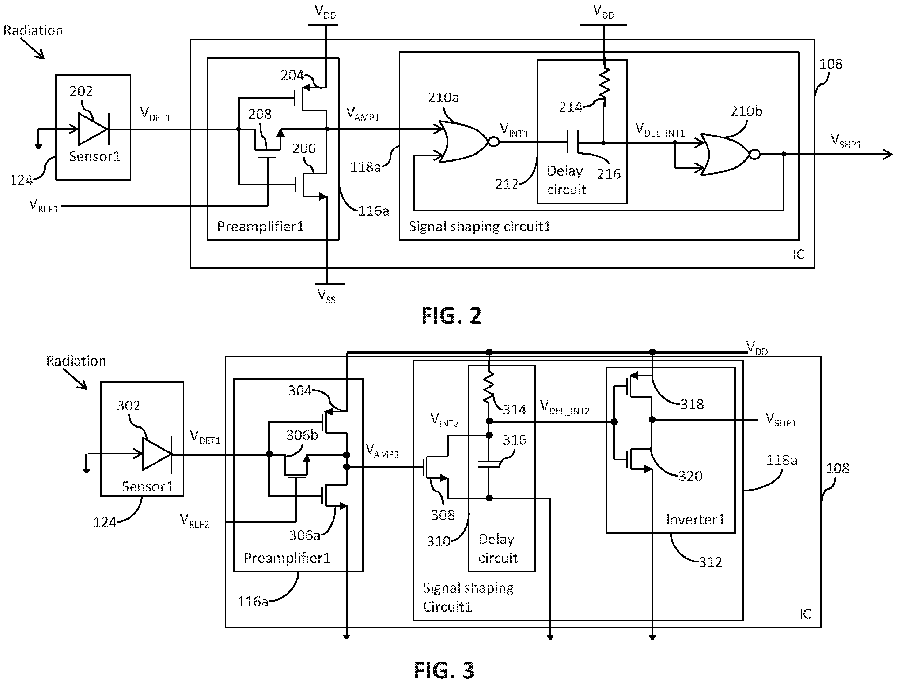

Referring now to FIG. 2, a schematic circuit diagram of the radiation detector **102** in accordance with an embodiment of the present invention is shown. Further, the first detector **124** is implemented using the silicon technology, and the IC **108** is implemented using the CMOS technology. For illustrative purpose, FIG. 2 shows the first sensor **124,** the first preamplifier **116a,** and the first signal shaping circuit **118a**. It will be well understood to a person skilled in the art that the second and third preamplifiers **116b** and **116c** are structurally and functionally similar to the first preamplifier **116a** and the second and third signal shaping circuits **118b** and **118c** are structurally and functionally similar to the first signal shaping circuit **118a**.

The first sensor **124** includes a first diode **202.** The first preamplifier **116a** includes first through third transistors **204, 206, 208**. In an embodiment, the first transistor **204** is a p-channel MOS (PMOS) transistor, and the second and third transistors **206** and **208** are n-channel MOS (NMOS) transistors. The first signal shaping circuit **118a** includes first and second logic gates **210a** and **210b** and a delay circuit **212.** In an embodiment, the first and second logic gates **210a** and **210b** are NOR logic gates. The delay circuit **212** includes a resistor **214** and a capacitor **216.**

When the first detector **110** detects the first radiation, the first conversion layer **122** generates the first conversion output signal **V_{CON1}** corresponding to the first radiation. The first sensor **124** receives the first conversion output signal **V_{CON1}** and generates the first detector signal **V_{DET1}.**

A source terminal of the first transistor **204** is connected to a supply voltage **V_{DD}**. A gate terminal of the first transistor **204** is connected to the first diode **202** for receiving the first detector signal **V_{DET1}.** A drain terminal of the second transistor **206** is connected to a drain terminal of the first transistor **204** to generate the first amplified detector signal **V_{AMP1}.** A gate terminal of the second transistor **206** is connected to the first diode **202** for receiving the first detector signal **V_{DET1}** and a source terminal thereof is connected to a supply voltage **Vₛₛ.** A source terminal of the third transistor **208** is connected to the drain terminal of the first transistor **204** and a drain terminal of the third transistor **208** is connected to the gate terminal of the first transistor **204.** A gate terminal of the third transistor **208** receives a first reference voltage signal **V_{REF1}.**

The first logic gate **210a** has a first input terminal connected to the drain of the first transistor **204** for receiving the first amplified detector signal **V_{AMP1}** and a second input terminal for receiving the first shaped detector signal **V_{SHP1}.** The first logic gate **210a** has an output terminal for generating a first intermediate signal **V_{INT1}.** A first terminal of the capacitor **216** is connected to the output terminal of the first logic gate **210a** for receiving the first intermediate signal **V_{INT1}.** A first end of the resistor **214** is connected to the supply voltage **V_{DD}**, and a second end of the resistor **214** is connected to a second terminal of the capacitor **216** for generating a delayed version of the first intermediate signal (hereinafter referred to as "delayed first intermediate signal") **V_{DEL_INT1}** First and second input terminals of the second logic gate **210b** are connected to the delay circuit **212** for receiving the delayed first intermediate signal **V_{DEL_INT1}**. The second logic gate **210b** has an output terminal for generating the first shaped detector signal **V_{SHP1}.**

In operation, when the first detector **110** receives the first radiation, the diode **202** activates the first detector signal **V_{DET1}.** Thus, the first preamplifier **116a** receives the first detector signal **V_{DET1,}**and amplifies and inverts the first detector signal **V_{DET1}.** Further, the first preamplifier **116a** activates the first amplified detector signal **V_{AMP1.}** The first logic gate **210a** receives the activated first amplified detector signal **V_{AMP1}** and the first shaped detector signal **V_{SHP1}.** at logic low state and generates the first intermediate signal **V_{INT1}** at logic low state. The capacitor **216** receives the first intermediate signal **V_{INT1}** at logic low state and starts discharging to ground. Thus, the delay circuit **212** generates the delayed first intermediate signal **V_{DEL_INT1}** at logic low state. The second logic gate **210b** receives the delayed first intermediate signal **V_{DEL_INT1}** at logic low state and generates the first shaped detector signal **V_{SHP1}.** at logic high state. The first shaped detector signal **V_{SHP1}.** at logic high state indicates that the radiation detector **102** has detected the first radiation. The time period for which the first shaped detector signal **V_{SHP1}.** remains high depends on the discharging rate of the capacitor **216.** After the time period has elapsed, the delay circuit **212** generates the delayed first intermediate signal **V_{DEL_INT1}** at a voltage level that is greater than a threshold voltage of the second logic gate **210b.** Thus, the second logic gate **210b** generates the first shaped detector signal **V_{SHP1}.** at logic low state.

It will be apparent to a person skilled in the art that the second signal shaping circuit **118b** generates the second shaped detector signal **V_{SHP2}** at logic high state when the radiation detector **102** receives the second radiation and the third signal shaping circuit **118c** generates the third shaped detector signal **V_{SHP3}** at logic high state when the radiation detector **102** receives the third radiation.

Referring now to FIG. 3, a schematic circuit diagram of the radiation detector **102** implemented in the thin film technology in accordance with another embodiment of the present invention is shown. For illustrative purpose, FIG. 3 shows the first sensor **124,** the first preamplifier **116a,** and the first signal shaping circuit **118a**. The first sensor **124** includes a second diode **302.** The first preamplifier **116a** includes a first thin film transistor **304** and second and third thin film transistors **306a** and **306b.** The first signal shaping circuit **118a** includes a fourth thin film transistor **308,** a delay circuit **310,** and a first thin film inverter **312.** The first thin film inverter **312** can include a fifth transistor **318** and a sixth transistor **320.** In an embodiment, the first and fifth thin film transistors **304** and **318** are PMOS transistors and the second, third, and sixth thin film transistors **306a**, **306b,** and **320** are NMOS transistors.

A source terminal of the first thin film transistor **304** is connected to a supply voltage **V_{DD}**. A gate terminal of the first thin film transistor **304** is connected to the second diode **302** for receiving the first detector signal **V_{DET1}.** A drain terminal of the second thin film transistor **306a** is connected to a drain terminal of the first thin film transistor **304** to generate the first amplified detector signal **V_{AMP1}** A gate terminal of the second thin film transistor **306a** is connected to the second diode **302** for receiving the first detector signal **V_{DET1}** and a source terminal thereof is connected to ground. A source terminal of the third thin film transistor **306b** is connected to the drain terminal of the first thin film transistor **304** and a drain terminal of the third thin film transistor **306b** is connected to the gate terminal of the first thin film transistor **304.** A gate terminal of the third thin film transistor **306b** receives a second reference voltage signal **V_{REF2}.**

A gate terminal of the fourth thin film transistor **308** is connected to the drain terminal of the first thin film transistor **304** for receiving the first amplified detector signal **V_{AMP1.}** A drain terminal of the fourth thin film transistor **308** generates a second intermediate signal **V_{INT2},** and a source terminal thereof is connected to ground. The delay circuit **310** is connected to the drain terminal of the fourth thin film transistor **308** for receiving the second intermediate signal **Vᵢₙₜ₂** and generates a delayed version of the second intermediate signal (hereinafter referred to as "delayed second intermediate signal") **V_{DEL_INT2}.** The delay circuit **310** includes a thin film resistor **314** and a thin film capacitor **316.** A first end of the thin film resistor **314** is connected to the supply voltage **V_{DD}**. A first terminal of the thin film capacitor **316** is connected to a second end of the thin film resistor **314** for generating the delayed second intermediate signal **V_{DEL_iNT2.}**

A gate terminal of the fifth thin film transistor **318** is connected to the second end of the thin film resistor **314** for receiving the delayed second intermediate signal **V_{DEL_INT2},** and a source terminal thereof is connected to the supply voltage **V_{DD}**. A gate terminal of the sixth thin film transistor **320** is connected to the second end of the thin film resistor **314** for receiving the delayed second intermediate signal **V_{DEL_INT2}.** A drain terminal of the sixth thin film transistor **320** is connected to a drain terminal of the fifth thin film transistor **318** for generating the first shaped detector signal **V_{SHP1}**.

In operation, when the first sensor **124** activates the first detector signal **V_{DET1,}**the first preamplifier **116a** amplifies and inverts the first detector signal **V_{DET1,}**and activates the first amplified detector signal V**_{AMP1}.** The fourth thin film transistor **308** activates the second intermediate signal **V_{INT2}.** The thin film capacitor **316** thus discharges to ground in a predetermined time period. The first thin film **inverter 312** inverts and amplifies the delayed second intermediate signal **V_{DEL_INT2}** and generates the first shaped detector signal **V_{SHP1}** at logic high state. After the elapse of the predetermined time period, the first thin film inverter **312** generates the first shaped detector signal **V_{SHP1}.** at logic low state.

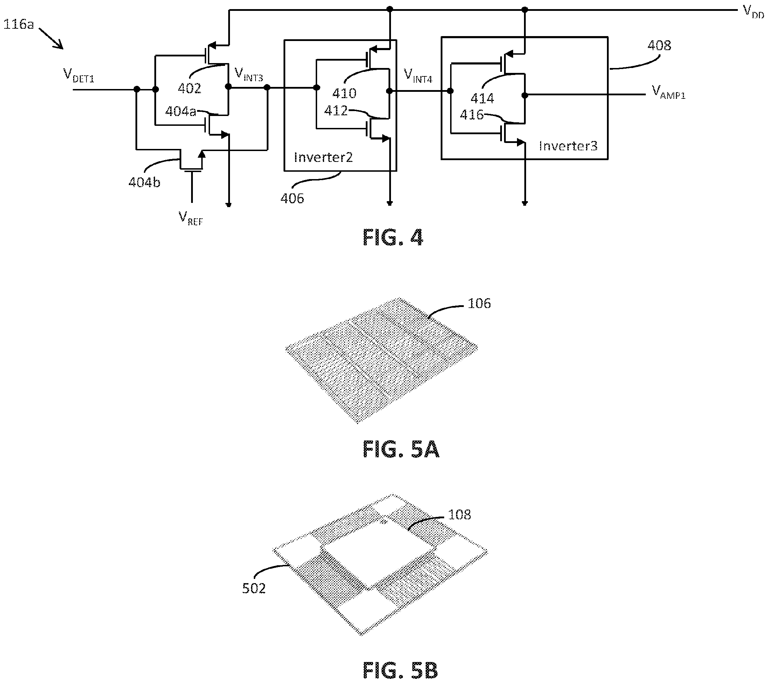

Referring now to FIG. 4, a schematic circuit diagram of the first preamplifier **116a** in accordance with another embodiment of the present invention is shown. The first preamplifier **116a** is implemented using the thin film technology. The first preamplifier **116a** includes the seventh though ninth thin film transistors **402, 404a,** and **404b** and second and third thin film inverters **406** and **408.** The seventh though ninth thin film transistors **402, 404a,** and **404b** are structurally and functionally similar to the first through third thin film transistors **304, 306a,** and **306b.** In an embodiment, the seventh thin film transistor **402** is a PMOS transistor and the eighth and ninth thin film transistors **404a** and **404b** are NMOS transistors. The second thin film inverter **406** includes tenth and eleventh thin film transistors **410** and **412.** In an embodiment, the tenth thin film transistor **410** is a PMOS transistor and the eleventh thin film transistor **412** is an NMOS transistor. A drain terminal of the seventh thin film transistor **402** generates a third intermediate signal **V_{INT3}.** A source terminal of the tenth thin film transistor **410** is connected to the supply voltage **V_{DD}** and a gate terminal of the tenth thin film transistor **410** is connected to the drain terminal of the seventh thin film transistor **402** for receiving the third intermediate signal **V_{INT3}.** A gate terminal of the eleventh thin film transistor **412** is connected to the drain terminal of the seventh thin film transistor **402** for receiving the third intermediate signal **V_{INT3}.** A drain terminal of the eleventh thin film transistor **412** is connected to a drain terminal of the tenth thin film transistor **410** for generating a fourth intermediate signal **V_{INT4}** and a source terminal thereof is connected to ground.

The third thin film inverter **408** includes twelfth and thirteenth thin film transistors **414** and **416**. In an embodiment, the twelfth thin film transistor **414** is a PMOS transistor and the thirteenth thin film transistor **416** is an NMOS transistor. A source terminal of the twelfth thin film transistor **414** is connected to the supply voltage **V_{DD}** and a gate terminal of the twelfth thin film transistor **414** is connected to the drain terminal of the tenth thin film transistor **410** for receiving the fourth intermediate signal **V_{INT4}.** A gate terminal of the thirteenth thin film transistor **416** is connected to a drain terminal of the tenth thin film transistor **410** for receiving the fourth intermediate signal **V_{INT4}.** A drain terminal of the thirteenth thin film transistor **416** is connected to a drain terminal of the twelfth thin film transistor **414** for generating the first amplified detector signal **V_{AMP1}** and a source terminal thereof is connected to ground.

Referring now to FIGS. 5A and 5B, a front view and a rear view of the radiation detector **102** in accordance with an embodiment of the present invention is shown. The radiation detector **102** includes the array of detectors **106,** the IC **108,** and a substrate **502.**

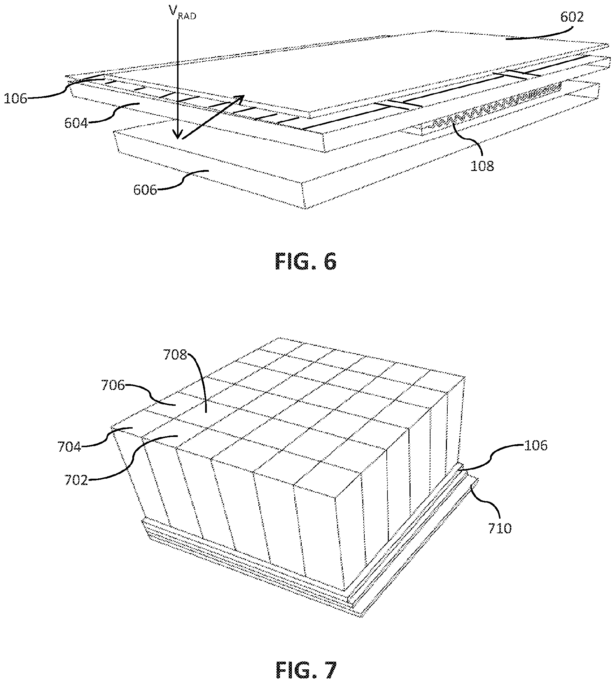

Referring now to FIG. 6, a perspective view of the radiation detector **102** in accordance with another embodiment of the present invention is shown. The radiation detector **102** includes a conversion layer **602,** a printed circuit board **604,** and a reflector **606.** The radiation detector **102** further includes the array of detectors **106** and the IC **108.** The reflector **606** receives the multiple radiations **V_{RAD}** and reflects the multiple radiations **V_{RAD}**. The reflected multiple radiations **V_{RAD}** are received by the conversion layer **602.**

According to the claimed invention, the reflector is a paraffin block. Thus, the efficiency of detecting the multiple radiations **V_{RAD}** increases by utilizing the reflector **606.**

In yet another embodiment, when the array of detectors **106** are manufactured utilizing the thin film technology, the first detector **110** is stacked on top of the second detector **112,** thereby increasing the efficiency of detecting the radiation **V_{RAD}** by the array of detectors **106.** In an example, the radiation **V_{RAD}** is neutron radiation. It will be apparent to a person skilled in the art that in addition to the first detector **110,** the third detector **114** may be stacked on top of the second detector **112,** thereby further increasing the efficiency of detecting the radiations **V_{RAD}**.

Referring now to FIG. 7, a perspective view of the radiation detector **102** in accordance with another embodiment of the present invention is shown. The radiation detector **102** includes first through fourth conversion layers **702, 704, 706, 708,** the array of detectors **106,** and a thin film transistor (TFT) backplane **710.** The TFT backplane **710** includes the array of preamplifiers **116** and the array of signal shaping circuits **118.**

Thus, the radiation detector **102** is simple to design, cost-effective, and portable. Further, multiple detectors can be implemented in a single radiation detector **102,** thereby increasing its resolution. The radiation detector **102** can be configured to detect a single (type of) radiation **V_{RAD}** as well as multiple (types of) radiation(s) **V_{RAD}**. The multiple detectors to detect a single type of radiation **V_{RAD}** provide a large area for detecting the radiations **V_{RAD}**. Further, the voltages required for operating the array of preamplifiers **116** and the array of signal shaping circuits **118** are low. Thus, the power consumed by the radiation detector **102** is low. Since the radiation detector **102** can be interfaced with smartphones, tablets, and personal computers, the radiation detector **102** does not require in-built circuits for processing the output signal **V_{OUT.}** or displaying the type of radiation **V_{RAD}**. Further, the use of smartphones, tablets, and personal computers with the radiation detector **102** results in high-speed data manipulation of the output signal **V_{OUT},** thereby achieving a faster processing of the output signal **V_{OUT}.** Moreover, the output signal **V_{OUT.}** can be wirelessly transmitted from smartphones to several locations such as data centers for analytical use. The smartphone can be used for identifying a geo-location of a radiation source that emits the radiation **V_{RAD}**, thereby obtaining the source of the radiation **V_{RAD}**. The radiation detector **102** implemented using the thin film technology has very low sensitivity to false gamma-rays, thereby avoiding a false output signal V_{OUT}. Further, they can sustain very high temperatures.

While various embodiments of the present invention have been illustrated and described, it will be clear that the present invention is not limited to these embodiments only, but is as defined in the claims.

## Claims

1. A system (102) for detecting a plurality of radiations, comprising:
an array of detectors (106) for receiving the plurality of radiations and generating a corresponding plurality of detector signals, wherein a first detector (110, 112) of the array of detectors (106) comprises:
at least one conversion layer (122, 126) for receiving the plurality of radiations and generating a conversion output signal corresponding to a first radiation of the plurality of radiations, and
a first sensor (124, 128), connected to the at least one conversion layer (122, 126), for receiving the conversion output signal and generating a first detector signal of the plurality of detector signals corresponding to the first radiation,
and wherein a second detector (110, 112, 114) of the plurality of detectors (106) includes a second sensor (124, 128, 130) for receiving the plurality of radiations and generating a second detector signal of the plurality of detector signals corresponding to a second radiation of the plurality of radiations; and
an array of preamplifiers (116), connected to the array of detectors (106) for receiving the plurality of detector signals and generating a corresponding plurality of amplified detector signals, wherein first and second preamplifier of the array of preamplifiers (116) are connected to the first and second detector for receiving the first and second detector signals and generating first and second amplified detector signal of the plurality of amplified detector signals, respectively;
an array of signal shaping circuits (118), connected to the corresponding array of preamplifiers (116), for receiving the plurality of amplified detector signals and generating a corresponding plurality of shaped detector signals, wherein first and second signal shaping circuit of the array of signal shaping circuits are connected to the first and second preamplifier for receiving the first and second amplified detector signal and generating first and second shaped detector signal of the plurality of shaped detector signals, respectively, wherein the array of detectors (106) is implemented using at least one of a silicon technology and a thin film technology and the array of preamplifiers (116) and the array of signal shaping circuits (118) are implemented using at least one of a complementary metal oxide semiconductor (CMOS) technology and the thin film technology;
a processing unit (120), connected to the array of signal shaping circuits (118), for receiving the plurality of shaped detector signals and generating an output signal, wherein the output signal is indicative of detecting at least one of the first and second radiations; and
a paraffin block (606), wherein the first sensor (124, 128) is positioned between the at least one conversion layer (122, 126) and the paraffin block.

2. The system of claim 1, wherein the first radiation includes at least one of a gamma radiation, a neutron radiation, and an X-ray radiation, and the second radiation includes at least one of an alpha radiation and a beta radiation, and
wherein the at least one conversion layer (122, 126) is at least one of a neutron conversion layer, a gamma scintillator, and an X-ray scintillator.

3. The system of claim 1, wherein the first sensor (124, 128) is a charge sensor, and wherein the sensor comprises at least one of a PN diode and a PIN diode, and
wherein the second sensor (124, 128, 130) is a photon-sensitive sensor, and wherein the second sensor (124, 128, 130) comprises at least one of a photosensor and a photoconductor.

4. The system of claim 1, wherein the processing unit (120) includes at least one of a logic gate, a processor, and a microcontroller.

5. The system of claim 1, wherein the first preamplifier (116a, 116b) comprises:
a first transistor (204) having a source connected to a positive supply voltage and a gate connected to the first detector (110, 112) for receiving the first detector signal;
a second transistor (206) having a gate connected to the first detector for receiving the first detector signal, a drain connected to a drain of the first transistor (204) for generating the first amplified detector signal, and a source connected to a negative supply voltage; and
a third transistor (208) having a drain connected to the gate of the first transistor (204), a gate for receiving a reference voltage signal, and a source connected to the drain of the first transistor (204) and
wherein the first signal shaping circuit (118a, 118b) includes:
a first logic (210a) gate for receiving the first shaped detector signal, and connected to the drain of the first transistor (204) for receiving the first amplified detector signal and generating an intermediate signal; and
a second logic gate (210b) for receiving a delayed version of the intermediate signal and generating the first shaped detector signal.

6. The system of claim 1, wherein the first sensor (110, 112) is a charge sensor and the second sensor (110, 112, 114) is a photon-sensitive sensor, and
wherein the first signal shaping circuit (118a, 118b) includes:
a transistor (308) having a gate connected to the first preamplifier (116a, 116b) for receiving the first amplified detector signal, a drain for generating an intermediate signal, and a source connected to ground; and
an inverter (312) for receiving a delayed version of the intermediate signal, and generating the first shaped detector signal.

7. The system of claim 1, wherein the second detector (110, 112, 114) further comprises at least one conversion layer (122, 126) and the second detector signal is generated in dependence on a conversion output signal generated by the at least one conversion layer of the second detector.

## Patentansprüche

1. System (102) zum Erfassen einer Mehrzahl von Strahlungen, umfassend:
eine Anordnung von Detektoren (106) zum Empfangen der Mehrzahl von Strahlungen und zum Erzeugen einer entsprechenden Mehrzahl von Detektorsignalen, wobei ein erster Detektor (110, 112) der Anordnung von Detektoren (106) umfasst:
wenigstens eine Umwandlungsschicht (122, 126) zum Empfangen der Mehrzahl von Strahlungen und Erzeugen eines Umwandlungsausgangssignals, das einer ersten Strahlung der Mehrzahl von Strahlungen entspricht, und
einen ersten Sensor (124, 128), der mit der wenigstens einen Umwandlungsschicht (122, 126) verbunden ist, zum Empfangen des Umwandlungsausgangssignals und zum Erzeugen eines ersten Detektorsignals der Mehrzahl von Detektorsignalen, das der ersten Strahlung entspricht,
und wobei ein zweiter Detektor (110, 112, 114) der Mehrzahl von Detektoren (106) einen zweiten Sensor (124, 128, 130) zum Empfangen der Mehrzahl von Strahlungen und zum Erzeugen eines zweiten Detektorsignals der Mehrzahl von Detektorsignalen beinhaltet, das einer zweiten Strahlung der Mehrzahl von Strahlungen entspricht; und
eine Anordnung von Vorverstärkern (116), die mit der Anordnung von Detektoren (106) zum Empfangen der Mehrzahl von Detektorsignalen und zum Erzeugen einer entsprechende Mehrzahl von verstärkten Detektorsignalen verbunden ist, wobei der erste und der zweite Vorverstärker der Anordnung von Vorverstärkern (116) mit dem ersten und zweiten Detektor zum Empfangen des ersten und des zweiten Detektorsignals beziehungsweise zum Erzeugen des ersten und des zweiten verstärkten Detektorsignals der Mehrzahl von verstärkten Detektorsignalen verbunden sind;
eine Anordnung von Signalformungsschaltungen (118), die mit der entsprechenden Anordnung von Vorverstärkern (116) verbunden ist, zum Empfangen der Mehrzahl von verstärkten Detektorsignalen und zum Erzeugen einer entsprechenden Mehrzahl von geformten Detektorsignalen, wobei die erste und die zweite Signalformungsschaltung der Anordnung von Signalformungsschaltungen mit dem ersten und dem zweiten Vorverstärker zum Empfangen des ersten und des zweiten verstärkten Detektorsignals beziehungsweise zum Erzeugen des ersten und des zweiten geformten Detektorsignals der Mehrzahl von geformten Detektorsignalen verbunden sind, wobei die Anordnung von Detektoren (106) unter Verwendung wenigstens einer von einer Siliziumtechnologie oder einer Dünnschichttechnologie implementiert ist und die Anordnung von Vorverstärkern (116) und die Anordnung von Signalformungsschaltungen (118) unter Verwendung wenigstens einer von einer Komplementär-Metalloxidhalbleiter- (CMOS-) Technologie und der Dünnschichttechnologie implementiert werden;
eine Verarbeitungseinheit (120), die mit der Anordnung von Signalformungsschaltungen (118) zum Empfangen der Mehrzahl von geformten Detektorsignalen und zum Erzeugen eines Ausgangssignals verbunden ist, wobei das Ausgangssignal das Erfassen wenigstens einer der ersten und der zweiten Strahlungen anzeigt; und
einen Paraffinblock (606), wobei der erste Sensor (124, 128) zwischen der wenigstens einen Umwandlungsschicht (122, 126) und dem Paraffinblock angeordnet ist.

2. System nach Anspruch 1, wobei die erste Strahlung wenigstens eine von einer Gammastrahlung, einer Neutronenstrahlung und einer Röntgenstrahlung beinhaltet, und die zweite Strahlung wenigstens eine von einer Alphastrahlung und einer Betastrahlung beinhaltet, und
wobei die wenigstens eine Umwandlungsschicht (122, 126) wenigstens eine/einer von einer Neutronenumwandlungsschicht, einem Gammaszintillator oder einem Röntgenszintillator ist.

3. System nach Anspruch 1, wobei der erste Sensor (124, 128) ein Ladungssensor ist, und wobei der Sensor wenigstens eine von einer PN-Diode und einer PIN-Diode umfasst, und
wobei der zweite Sensor (124, 128, 130) ein photonenempfindlicher Sensor ist, und wobei der zweite Sensor (124, 128, 130) wenigstens einen von einem Fotosensor und einem Fotoleiter umfasst.

4. System nach Anspruch 1, wobei die Verarbeitungseinheit (120) wenigstens eines von einem Logikgatter, einem Prozessor und einem Mikrocontroller beinhaltet.

5. System nach Anspruch 1, wobei der erste Vorverstärker (116a, 116b) umfasst:
einen ersten Transistor (204) mit einer Quelle, die mit einer positiven Versorgungsspannung verbunden ist, und einem Gate, das mit dem ersten Detektor (110, 112) zum Empfangen des ersten Detektorsignals verbunden ist;
einen zweiten Transistor (206) mit einem Gate, das mit dem ersten Detektor zum Empfangen des ersten Detektorsignals verbunden ist, einem Drain, der mit einem Drain des ersten Transistors (204) zum Erzeugen des ersten verstärkten Detektorsignals verbunden ist, und einer Quelle, die mit einer negativen Versorgungsspannung verbunden ist; und
einen dritten Transistor (208) mit einem Drain, der mit dem Gate des ersten Transistors (204) verbunden ist, mit einem Gate zum Empfangen eines Referenzspannungssignals und einer Quelle, die mit dem Drain des ersten Transistors (204) verbunden ist, und
wobei die erste Signalformungsschaltung (118a, 118b) beinhaltet:
ein erstes logisches (210a) Gate zum Empfangen des ersten geformten Detektorsignals, und mit dem Drain des ersten Transistors (204) zum Empfangen des ersten verstärkten Detektorsignals und zum Erzeugen eines Zwischensignals verbunden; und
ein zweites logisches Gate (210b) zum Empfangen einer verzögerten Version des Zwischensignals und zum Erzeugen des ersten geformten Detektorsignals.

6. System nach Anspruch 1, wobei der erste Sensor (110, 112) ein Ladungssensor ist und der zweite Sensor (110, 112, 114) ein photonenempfindlicher Sensor ist, und
wobei die erste Signalformungsschaltung (118a, 118b) beinhaltet:
einen Transistor (308) mit einem Gate, das mit dem ersten Vorverstärker (116a, 116b) zum Empfangen des ersten verstärkten Detektorsignals verbunden ist, einem Drain zum Erzeugen eines Zwischensignals und einer Quelle, die mit Masse verbunden ist; und
einen Inverter (312) zum Empfangen einer verzögerten Version des Zwischensignals und zum Erzeugen des ersten geformten Detektorsignals.

7. System nach Anspruch 1, wobei der zweite Detektor (110, 112, 114) ferner wenigstens eine Umwandlungsschicht (122, 126) umfasst und das zweite Detektorsignal in Abhängigkeit von einem Umwandlungsausgangssignal erzeugt wird, das von der wenigstens einen Umwandlungsschicht des zweiten Detektors erzeugt wird.

## Revendications

1. Système (102) pour détecter une pluralité de rayonnements, comprenant :
un réseau de détecteurs (106) pour recevoir la pluralité de rayonnements et générer une pluralité correspondante de signaux de détecteur, dans lequel un premier détecteur (110, 112) du réseau de détecteurs (106) comprend :
au moins une couche de conversion (122, 126) pour recevoir la pluralité de rayonnements et générer un signal de sortie de conversion correspondant à un premier rayonnement de la pluralité de rayonnements, et
un premier capteur (124, 128), connecté à l'au moins une couche de conversion (122, 126), pour recevoir le signal de sortie de conversion et générer un premier signal de détecteur de la pluralité de signaux de détecteur correspondant au premier rayonnement,
et dans lequel un second détecteur (110, 112, 114) de la pluralité de détecteurs (106) inclut un second capteur (124, 128, 130) pour recevoir la pluralité de rayonnements et générer un second signal de détecteur de la pluralité de signaux de détecteur correspondant à un second rayonnement de la pluralité de rayonnements ; et
un réseau de préamplificateurs (116), connecté au réseau de détecteurs (106) pour recevoir la pluralité de signaux de détecteur et générer une pluralité correspondante de signaux de détecteur amplifiés, dans lequel des premier et second préamplificateurs du réseau de préamplificateurs (116) sont connectés aux premier et second détecteurs pour recevoir les premier et second signaux de détecteur et générer des premier et second signaux de détecteur amplifiés de la pluralité de signaux de détecteur amplifiés, respectivement ;
un réseau de circuits de mise en forme de signal (118), connecté au réseau correspondant de préamplificateurs (116), pour recevoir la pluralité de signaux de détecteur amplifiés et générer une pluralité correspondante de signaux de détecteur mis en forme, dans lequel des premier et second circuits de mise en forme de signal du réseau de circuits de mise en forme de signal sont connectés aux premier et second préamplificateurs pour recevoir les premier et second signaux de détecteur amplifiés et générer des premier et second signaux de détecteur mis en forme de la pluralité de signaux de détecteur mis en forme, respectivement, dans lequel le réseau de détecteurs (106) est mis en œuvre en utilisant au moins une d'une technologie de silicium et d'une technologie de film mince et le réseau de préamplificateurs (116) et le réseau de circuits de mise en forme de signal (118) sont mis en œuvre en utilisant au moins une d'une technologie de semi-conducteur à oxyde de métal complémentaire (CMOS) et de la technologie de film mince ;
une unité de traitement (120), connectée au réseau de circuits de mise en forme de signal (118), pour recevoir la pluralité de signaux de détecteur mis en forme et générer un signal de sortie, dans lequel le signal de sortie est indicatif de la détection d'au moins un des premier et second rayonnements ; et
un bloc de paraffine (606),
dans lequel le premier capteur (124, 128) est positionné entre l'au moins une couche de conversion (122, 126) et le bloc de paraffine.

2. Système selon la revendication 1, dans lequel le premier rayonnement inclut au moins un d'un rayonnement gamma, d'un rayonnement de neutrons, et d'un rayonnement de rayons X, et le second rayonnement inclut au moins un d'un rayonnement alpha et d'un rayonnement bêta, et
dans lequel l'au moins une couche de conversion (122, 126) est au moins un d'une couche de conversion de neutrons, d'un scintillateur gamma, et d'un scintillateur à rayons X.

3. Système selon la revendication 1, dans lequel le premier capteur (124, 128) est un capteur de charge, et dans lequel le capteur comprend au moins une d'une diode PN et d'une diode PIN, et
dans lequel le second capteur (124, 128, 130) est un capteur sensible aux photons, et dans lequel le second capteur (124, 128, 130) comprend au moins un d'un photocapteur et d'un photoconducteur.

4. Système selon la revendication 1, dans lequel l'unité de traitement (120) inclut au moins un d'une porte logique, d'un processeur, et d'un microcontrôleur.

5. Système selon la revendication 1, dans lequel le premier préamplificateur (116a, 116b) comprend :
un premier transistor (204) ayant une source connectée à une tension d'alimentation positive et une porte connectée au premier détecteur (110, 112) pour recevoir le premier signal de détecteur ;
un deuxième transistor (206) ayant une porte connectée au premier détecteur pour recevoir le premier signal de détecteur, un drain connecté à un drain du premier transistor (204) pour générer le premier signal de détecteur amplifié, et une source connectée à une tension d'alimentation négative ; et
un troisième transistor (208) ayant un drain connecté à la porte du premier transistor (204), une porte pour recevoir un signal de tension de référence, et une source connectée au drain du premier transistor (204) et
dans lequel le premier circuit de mise en forme de signal (118a, 118b) inclut :
une première porte logique (210a) pour recevoir le premier signal de détecteur mis en forme, et connectée au drain du premier transistor (204) pour recevoir le premier signal de détecteur amplifié et générer un signal intermédiaire ; et
une seconde porte logique (210b) pour recevoir une version retardée du signal intermédiaire et générer le premier signal de détecteur mis en forme.

6. Système selon la revendication 1, dans lequel le premier capteur (110, 112) est un capteur de charge et le second capteur (110, 112, 114) est un capteur sensible aux photons, et
dans lequel le premier circuit de mise en forme de signal (118a, 118b) inclut :
un transistor (308) ayant une porte connectée au premier préamplificateur (116a, 116b) pour recevoir le premier signal de détecteur amplifié, un drain pour générer un signal intermédiaire, et une source connectée à la terre ; et
un inverseur (312) pour recevoir une version retardée du signal intermédiaire, et générer le premier signal de détecteur mis en forme.

7. Système selon la revendication 1, dans lequel le second détecteur (110, 112, 114) comprend en outre au moins une couche de conversion (122, 126) et le second signal de détecteur est généré en fonction d'un signal de sortie de conversion généré par l'au moins une couche de conversion du second détecteur.
